**Europäisches Patentamt**

**European Patent Office**

**Office européen des brevets**

(19)

(11) Numéro de publication: **0 265 297 B1**

(12) **FASCICULE DE BREVET EUROPEEN**

(45) Date de publication du fascicule du brevet:
**22.11.90**

(51) Int. Cl.⁵: **F16H 1/44, F16H 1/455**

(21) Numéro de dépôt: **87401971.4**

(22) Date de dépôt: **02.09.87**

(54) Dispositif de transmission à différentiel notamment pour véhicule automobile.

(30) Priorité: **19.09.86 FR 8613187**

(43) Date de publication de la demande:
**27.04.88 Bulletin 88/17**

(45) Mention de la délivrance du brevet:
**22.11.90 Bulletin 90/47**

(84) Etats contractants désignés:
**DE ES GB IT SE**

(56) Documents cités:
**EP-A- 0 132 238**
**EP-A- 0 175 674**
**EP-A- 0 198 812**
**EP-A- 0 226 666**
**FR-A- 1 451 697**
**GB-A- 834 583**
**GB-A- 1 224 034**
**GB-A- 2 038 429**
**US-A- 3 590 954**
**US-A- 4 601 359**

(73) Titulaire: **GLAENZER SPICER, 10 Rue J.P. Timbaud,
F-78301 Poissy(FR)**

(72) Inventeur: **Guimbretiere, Pierre, 103, Route de
Saint-Germain, F-78640 Neauphle Le Château(FR)**

(74) Mandataire: **Moncheny, Michel et al, c/o Cabinet
Lavoix 2 Place d'Estienne d'Orves, F-75441 Paris
Cedex 09(FR)**

ACTORUM AG

## Description

La présente invention concerne les dispositifs de transmission destinés à être utilisés notamment sur des véhicules automobiles.

De façon plus précise, cette invention se rapporte à un dispositif comprenant un différentiel associé à un dispositif de contrôle et/ou de limitation de la rotation différentielle entre les deux arbres de sortie du différentiel. Ce dispositif de limitation est interposé soit entre les deux organes de sortie du différentiel soit entre l'un de ces organes de sortie et l'organe d'entrée.

Dans les différents agencements connus, et quelle que soit la nature du dispositif de limitation ou de contrôle, ce dernier est incorporé au mécanisme différentiel et est situé entre les paliers ou roulements qui supportent et stabilisent l'ensemble du différentiel. Cette disposition nécessite la fabrication de pièces différentes, selon que la transmission est équipée ou non d'un dispositif de contrôle ou de limitation et se traduit également par une modification de l'environnement du différentiel, selon encore une fois que la transmission comporte ou non ce dispositif de contrôle ou de limitation. Il en résulte un coût relativement élevé que ce soit pour l'équipement de véhicules neufs comportant cette option ou pour la transformation de véhicules existants.

On connaît également d'après le document GB-A 1 224 034 un agencement d'essieu dans lequel un dispositif de contrôle est disposé à l'extérieur du différentiel proprement dit, mais à l'intérieur d'un bâti qui prolonge en quelque sorte le carter de différentiel et entoure les éléments de la transmission situés entre le différentiel et les roues. Une telle disposition ne permet pas de résoudre le problème évoqué ci-dessus car le dispositif de contrôle, par ailleurs relativement complexe, se trouve enfermé dans une structure tout-à-fait analogue à un carter de différentiel.

Le but de l'invention est de proposer un agencement qui permette de remédier à ces divers inconvénients et de pouvoir équiper une transmission d'un dispositif de contrôle ou de limitation et ce de façon particulièrement économique et peu encombrante.

A cet effet, l'invention a pour objet un dispositif de transmission comprenant un mécanisme différentiel muni d'un organe d'entrée et de deux arbres de sortie montés rotatifs dans un bâti fixe, autour d'un même axe, par l'intermédiaire de deux paliers ou roulements disposés de part et d'autre de ce mécanisme différentiel, au moins deux desdits organes d'entrée et de sortie comportant des moyens de liaison en rotation destinés à permettre leur accouplement avec des éléments d'un dispositif de contrôle et/ou de limitation de la rotation différentielle entre les deux organes de sortie du dispositif différentiel, ces moyens de liaison étant disposés à l'extérieur desdits paliers ou roulements, caractérisé en ce que les deux organes de sortie sont reliés respectivement à un ensemble d'arbre de roue comportant deux joints homocinétiques et en ce que lesdits moyens de liaison sont disposés à l'air libre, à l'extérieur dudit bâti et sont accessibles en permanence de l'extérieur de ce bâti.

Suivant d'autres caractéristiques:
— L'organe d'entrée du différentiel comporte un prolongement latérale constitué par un tronçon d'arbre creux dans lequel s'étend l'un des arbres de sortie, ce prolongement latéral s'étendant au-delà du palier ou roulement associé et comportant des cannelures qui constituent lesdits moyens de liaison, ledit arbre de sortie comporte aussi des cannelures au voisinage de l'extrémité de ce tronçon d'arbre creux;
— les deux arbres sont reliés à des joints homocinétiques, l'un situé au voisinage du palier ou roulement associé, et l'autre éloigné de ce roulement, les moyens de liaison étant situés du côté de l'arbre le plus long et ce dernier étant supporté par un palier d'appui intermédiaire situé entre l'emplacement du dispositif de contrôle ou de limitation et le joint homocinétique associé.

L'invention va être décrite plus en détail ci-dessous en se référant aux dessins annexés, donnés uniquement à titre d'exemple et sur lesquels :

- la figure 1 est une vue en coupe longitudinale d'un premier mode de réalisation d'un dispositif suivant l'invention.

- la figure 2 est une vue en partie en coupe longitudinale et en partie en élévation d'un autre mode de réalisation de ce dispositif.

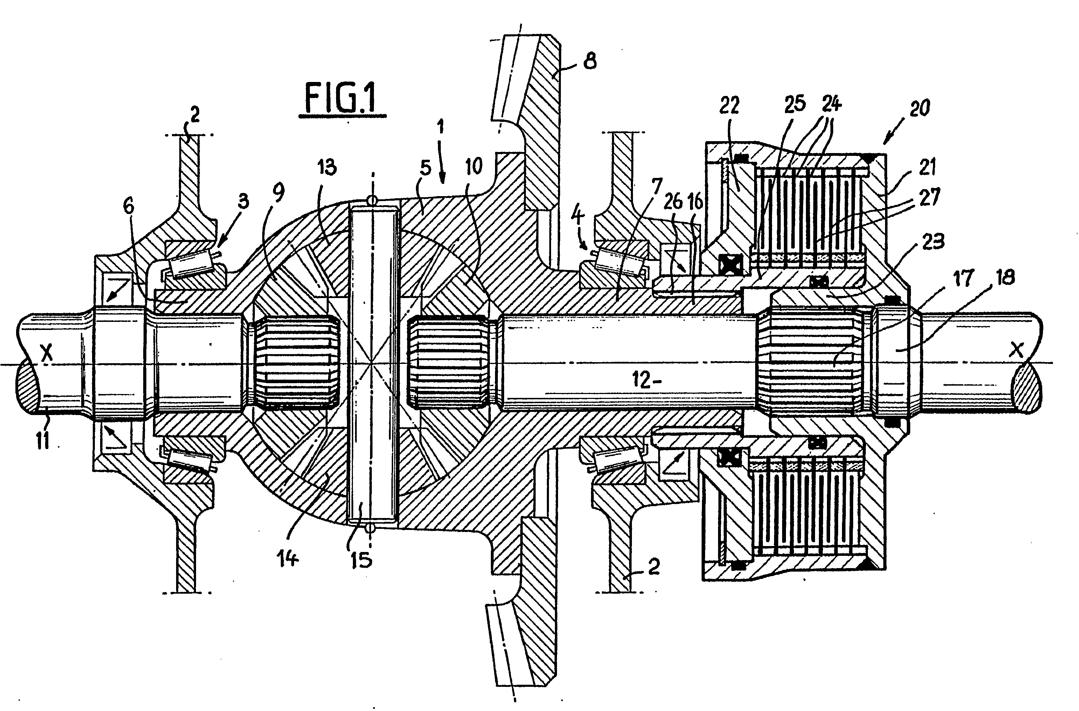

On a représenté à la figure 1 un schéma d'implantation relatif à un véhicule à pont arrière rigide. Sur cette figure 1, l'ensemble de différentiel 1 est supporté dans un bâti ou carter 2 par l'intermédiaire de deux roulements 3 et 4 d'axe X-X.

Le différentiel comprend de façon classique un boîtier 5 comportant deux prolongements latéraux 6, 7 par lesquels il est monté rotatif dans les roulements 3 et 4.

Le différentiel comprend également une couronne 8 solidaire du boîtier 5 et deux pignons planétaires 9, 10 coaxiaux et centrés sur le même axe XX que la couronne et les roulements 3 et 4, ces deux planétaires étant solidaires d'arbres de transmission 11, 12 qui traversent le boîtier et s'étendent en direction des roues motrices du véhicule. Des pignons satellites 13, 14 en prise avec les pignons planétaires sont montés rotatifs sur un porte-satellites 15 porté par le boîtier.

Suivant l'invention, le tronçon d'arbre creux 7 qui constitue un prolongement latéral du boîtier de différentiel s'étend au-delà du roulement 4 et comporte une partie d'extrémité cannelée 16. De même l'arbre de transmission 12 qui s'étend à travers cet arbre creux comporte dans une zone 17 située au voisinage de l'extrémité de cet arbre creux une partie cannelée extérieurement ainsi qu'une portée 18.

Ces deux portions cannelées 16, 17 sont destinées à permettre le montage d'un dispositif 20 de limitation ou de contrôle de glissement qui est constitué, dans l'exemple représenté, par un accouplement à glissement limité désigné dans le commerce par la marque Viscodrive. Ce dispositif comporte un premier élément 21 formant boîtier, fermé par une plaque 22 et comportant une partie axiale cylindrique 23 munie de cannelures internes coopérant avec les cannelures externes de l'arbre 12. Ce premier élément est solidaire en rotation d'une première série de disques 24.

Le dispositif 20 comprend également un deuxième élément ou moyeu 25 constitué par un manchon cylindrique étagé et comportant dans une première zone des cannelures internes 26 coopérant avec les cannelures externes 16 du tronçon d'arbre creux solidaire du boîtier de différentiel. Dans une deuxième zone, ce deuxième élément est rendu solidaire en rotation d'une deuxième série de disques 27 agencés de façon alternée avec les disques 24. Dans le volume délimité par le boîtier 21, et situé entre les séries de disques 24, 27, se trouve un fluide visqueux tel qu'une huile silicone.

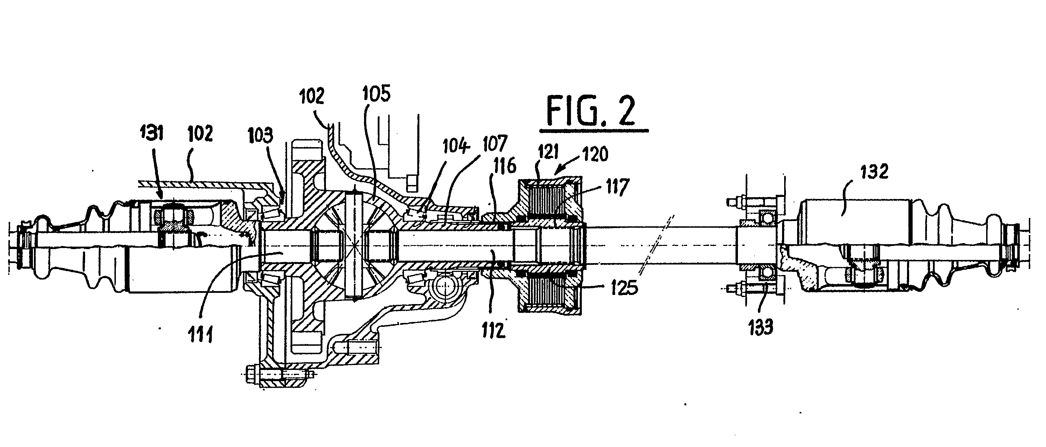

Un agencement analogue est représenté sur la figure 2, mais appliqué à un ensemble de train avant moteur pour véhicule à traction avant. Le moteur et une partie de la transmission (embrayage et boite de vitesse) qui sont disposés en position transversale par rapport au véhicule, ne sont pas représentés au dessin. Sur cette figure 2 les éléments correspondant à ceux de la figure 1 sont désignés par les mêmes numéros de référence, augmentés sde 100. Comme cela est relativement courant, le différentiel 101 est désaxé ou décalé en raison d'un manque de place en particulier au niveau du carter d'embrayage. De ce fait les demi-arbres de transmission qui relient les planétaires du différentiel aux roues motrices ont des longueurs inégales. Chacum des arbres de sortie 111, 112 est relié à un joint homocinétique 131, 132, de préférence à tripode, et le joint 132 associé à l'arbre 112 est disposé à l'extrémité de cet arbre, à l'extérieur d'un palier de support ou d'appui 133.

Comme dans le mode de réalisation précédent, le différentiel logé dans un carter 102 est supporté par deux roulements 103, 104, le boîtier 105 se prolonge au-delà de ce roulement, du côté où il est traversé par l'arbre de transmission le plus long, et ce prolongement 107 du boîtier ainsi que l'arbre de transmission adjacent 112 comportent des cannelures 116, 117 ou autres moyens d'accouplement équivalents permettant le montage d'un dispositif de contrôle ou de limitation 120, par exemple du type Viscodrive. Dans cette variante, c'est le moyeu 125 du dispositif 120 qui peut être rendu solidaire de l'arbre 112, tandis que le boîtier 121 est accouplé au prolongement 107.

Dans les deux modes d'implantation décrits, l'invention permet d'obtenir les avantages suivants :
- le fait de pourvoir l'un des arbres de sortie et un prolongement du boîtier de différentiel de moyens d'accouplement tels que des cannelures ne complique pas sensiblement la fabrication et n'augmente pratiquement pas le coût de la transmission ;
- le fait que ces moyens d'accouplement soient accessibles de l'extérieur du bâti et des roulements supportant le différentiel permet le montage en option d'un dispositif de limitation ou de controle qui améliore sensiblement le fonctionnement du différentiel ;
- grâce à cet agencement, le différentiel et son environnement immédiat sont inchangés, que le véhicule soit équipé ou non d'un tel dispositif de contrôle ou de limitation ;

- le dispositif de contrôle ou de limitation est facilement accessible ce qui constitue un avantage essentiel, en cas de montage additionnel, de réparation ou de dépose. Cette facilité d'accès permet même d'adapter aisément les caractéristiques de ce dispositif aux conditions d'utilisation du véhicule ;
- le dispositif de contrôle ou de limitation, dans la position qu'il occupe suivant l'invention, est situé, entre le boitier du différentiel et l'un de ses organes de sortie, en parallèle avec le trajet habituel de transmission du couple, ce qui permet d'éliminer des jeux mécaniques irréductibles qui existent, au minimum, dans les trois laisions successives porte-satellites-satellites, satellites-planétaires, planétaire-arbre de sortie ;
- l'ensemble est particulièrement compact car les moyens de liaison et le cas échéant le dispositif de contrôle ou de limitation sont disposés coaxialement au différentiel et aux arbres de roue.
- Bien entendu, on peut utiliser dans l'agencement décrit n'importe quel type convenable de dispositif de contrôle ou de limitation, à fonctionnement automatique ou asservi et piloté. De même, le mécanisme différentiel peut être de tout type connu. Il est également possible de prévoir des moyens selon l'invention de part et d'autre du différentiel.

**Revendications**

1. Dispositif de transmission comprenant un mécanisme différentiel (1; 101) monté dans un bâti fixe (2; 102) par l'intermédiaire de deux paliers ou roulements (3, 4; 103, 104), ce mécanisme différentiel comportant un organe d'entrée (5, 8; 105) et deux organes de sortie coaxiaux (11, 12; 111, 112), au moins deux desdits organes d'entrée et de sortie comportant des moyens (16, 17; 116, 117) de liaison en rotation destinés à permettre leur accouplement avec des éléments complémentaires d'un dispositif (20; 120) de contrôle et/ou de limitation de la rotation différentielle entre les deux organes de sortie du dispositif différentiel, des moyens de liaison étant disposés à l'extérieur desdits paliers ou roulement, caractérisé en ce que les deux organes de sortie sont reliés respectivement à un ensemble d'arbre de roue comportant deux joints homocinétiques (131, 132) et en ce que lesdits moyens de liaison (16, 17; 116, 117) sont disposés à l'air libre, à l'extérieur dudit bâti et sont accessibles en permanence de l'extérieur de ce bâti.

2. Dispositif de transmission suivant la revendication 1, dans lequel l'organe d'entrée (5; 105) du différentiel comporte un prolongement latéral (7; 107) constitué par un tronçon d'arbre creux dans lequel s'étend l'un des organes de sortie (12; 112), caractérisé en ce que ce tronçon d'arbre creux (7; 107) s'étend au-delà du palier ou roulement associé (4; 104) et comporte des cannelures qui constituent lesdits moyens de liaison (16; 116), ledit organe de sortie (12; 112) étant constitué par un tronçon d'arbre comportant aussi des cannelures (17; 117) au voisinage de l'extrémité adjacente du tronçon d'arbre creux (7; 107).

3. Dispositif de transmission suivant la revendication 2, caractérisé en ce que le dispositif de limitation (20; 120) est du type à glissement limité, à disques, et comprend un boîtier (21; 121) fermé par une plaque (22; 122) et comportant une partie axiale cylindrique (23; 123) munie de cannelures internes et un moyeu (25; 125) également muni de cannelures internes, les cannelures internes du boîtier et du moyeu coopérant respectivement avec les cannelures externes de l'organe d'entrée et de l'organe de sortie associé.

4. Dispositif de transmission suivant l'une quelconque des revendications 1 à 3, caractérisé en ce que les deux organes de sortie (111, 112) sont reliés à des joints homocinétiques (131, 132), l'un (131) situé au voisinage du palier ou roulement associé (103), et l'autre (132) éloigné du palier ou roulement associé (104), les moyens de liaison (116, 117) étant situés du côté de l'arbre le plus long (112) et ce dernier étant supporté par un palier d'appui intermédiaire (133) situé entre l'emplacement du dispositif (120) de contrôle ou de limitation et le joint homocinétique associé.

**Patentansprüche**

1. Kraftübertragungsvorrichtung mit einem mittels zweier Lager oder Rollenlager (3, 4; 103, 104) in ein festes Gehäuse (2; 102) eingebauten Differentialmechanismus, umfassend ein Eingangselement (5, 8; 105) und zwei koaxiale Ausgangselemente (11, 12; 111, 112), wobei mindestens zwei der genannten Eingangs- und Ausgangselemente drehende Verbindungsteile (16, 17; 116, 117) aufweisen, die dazu bestimmt sind, sie mit Komplementärteilen einer Einrichtung (20; 120) zur Kontrolle und/oder Begrenzung der Drehzahldifferenz zwischen den beiden Ausgangselementen des Differentialmechanismus zu kuppeln, und wobei die Verbindungsmittel außerhalb der obengenannten Lager oder Rollenlager angeordnet sind, dadurch gekennzeichnet, daß die beiden Ausgangselemente jeweils mit einer Radwelleneinheit verbunden sind, welche zwei homokinetische Gelenke (131, 132) aufweist, und daß die genannten Verbindungsteile (16, 17; 116, 117) außerhalb des genannten Gehäuses frei angeordnet sind und jederzeit von der Außenseite dieses Gehäuses zugänglich sind.

2. Kraftübertragungsvorrichtung gemäß Anspruch 1, in der das Eingangselement (105) des Differentialmechanismus eine aus einem Hohlwellenstück bestehende seitliche Verlängerung (7; 107) aufweist, in dem eines der Ausgangselemente (12; 112) liegt, dadurch gekennzeichnet, daß sich dieses Hohlwellenstück durch das zugeordnete Lager oder Rollenlager (4; 104) erstreckt und mit Keilnuten versehen ist, welche die genannten Verbindungsmittel (16; 116) bilden, und daß das genannte Ausgangselement (12; 112) durch ein Wellenstück gebildet wird, welches in der Nähe des angrenzenden Endes des Hohlwellenstücks (7; 107) ebenfalls mit Keilnuten versehen ist.

3. Kraftübertragungsmechanismus gemäß Anspruch 2, dadurch gekennzeichnet, daß die Begrenzungseinrichtung (20; 120) eine Schlupfbegrenzungsvorrichtung mit Scheiben ist und ein durch eine Platte (22; 122) verschlossenes Gehäuse (21; 121) umfaßt und einen mit inneren Keilnuten versehenen axialzylindrischen Teil (22; 123) und eine ebenfalls mit inneren Keilnuten versehene Nabe aufweist, wobei die inneren Keilnuten des Gehäuses und der Nabe jeweils mit den äußeren Keilnuten des Eingangselements und des zugeordneten Ausgangselements zusammenwirken.

4. Kraftübertragungsmechanismus gemäß einem der Ansprüche 1 bis 3, dadurch gekennzeichnet, daß die beiden Ausgangselemente (111, 112) mit homokinetischen Gelenken (131, 132) verbunden sind, wobei sich das eine (131) in der Nähe des zugeordneten Lagers oder Rollenlagers und das andere (132) vom zugeordneten Lager oder Rollenlager (104) entfernt befindet und sich die Verbindungsmittel (116, 117) auf der Seite der längeren Welle (112) befinden und wobei letztere von einem Zwischenstützlager (133) gehalten wird, das sich zwischen dem Platz der Kontroll- oder Begrenzungseinrichtung (120) und dem zugeordneten homokinetischen Gelenk befindet.

**Claims**

1. A transmission apparatus comprising a differential mechanism (1; 101) mounted in a fixed frame (2; 102) by means of two ball or roller bearings (3, 4; 103, 104), this differential mechanism having an input member (5, 8; 105) and two coaxial output members (11, 12; 111, 112), at least two of said input and output members comprising rotational connecting means (16, 17; 116, 117) adapted to enable them to be coupled to complementary elements of an apparatus (20; 120) for controlling and/or limiting the differential rotation between the two output members of the differential apparatus, the connecting means being arranged outside said ball or roller bearings, characterized in that the two output members are respectively connected to a wheel axle assembly comprising two homokinetic joints (131, 132) and in that the connecting means (16, 17; 116, 117) are arranged in the open air, outside the frame, and are permanently accessible from outside the frame.

2. A transmission apparatus according to claim 1, wherein the input member (5; 105) of the differential has a lateral extension (7; 107) consisting of a hollow shaft section in which one of the output members (12; 112) extends, characterized in that this hollow shaft section (7; 107) extends beyond the associated ball or roler bearing (4; 104) and has grooves which constitute the connecting means (16; 116), the said output member (12; 112) consisting of a shaft section which also comprises grooves (17; 117) in the vicinity of the adjacent end of the hollow shaft section (7; 107).

3. A transmission apparatus according to claim 2, characterized in that the limiting device (20; 120) is of a disc-type with limited sliding and has a casing (21; 121) closed off by a plate (22; 122) and comprising a cylindrical axial portion (23; 123) provided with internal grooves and a hub (25; 125) also provided with internal grooves, the internal grooves of the casing and hub co-operating, respectively, with the external grooves of the associated input member and output member.

4. A transmission apparatus according to any of claims 1 to 3, characterized in that the two output members (111, 112) are connected to homokinetic joints (131, 132), one of which (131) is located in the vicinity of the associated ball or roller bearing (103), whilst the other (132) is remote from the associated ball or roller bearing (104), the connecting means (116, 117) being located adjacent the longest shaft (112) and the latter is supported by an intermediate support bearing (133) situated between the position of the control or limitation device (120) and the associated homokinetic joint.

**FIG.1**

FIG. 2

EP 0 265 297 B1